**Europäisches Patentamt**

**European Patent Office**

**Office européen des brevets**

(19)

(11) Veröffentlichungsnummer : **0 085 864**
**B1**

(12)

# EUROPÄISCHE PATENTSCHRIFT

(45) Veröffentlichungstag der Patentschrift :
20.08.86

(21) Anmeldenummer : 83100472.6

(22) Anmeldetag : 20.01.83

(51) Int. Cl.⁴ : **H 02 K 11/00**

(54) **Drehstromgenerator mit Entstörkondensator.**

(30) Priorität : 04.02.82 DE 3203725

(43) Veröffentlichungstag der Anmeldung :
17.08.83 Patentblatt 83/33

(45) Bekanntmachung des Hinweises auf die Patenterteilung : 20.08.86 Patentblatt 86/34

(84) Benannte Vertragsstaaten :
DE FR GB IT

(56) Entgegenhaltungen :
DE-A- 2 847 502
GB-A- 2 044 552
US-A- 3 924 147

(73) Patentinhaber : **ROBERT BOSCH GMBH**
**Postfach 50**
**D-7000 Stuttgart 1 (DE)**

(72) Erfinder : **Bonecker, Franz**
**Schubartstrasse 25**
**D-7141 Freiberg (DE)**
Erfinder : **Fasterding, Henning**
**Behringweg 20**
**D-7145 Markgröningen (DE)**

## Beschreibung

Die Erfindung betrifft einen Drehstromgenerator, insbesondere für Kraftfahrzeuge, mit einem Entstörkondensator und mit mindestens drei Drehstromwicklungen und zwei voneinander isoliert auf der Anschlußplatte befestigten, sich vorzugsweise quer zur Generatorachse erstreckenden Kühlplatten, von denen jede jeweils drei für den Generator-Laststrom bestimmte Dioden trägt, die über in oder auf der Anschlußplatte sitzende Leiterbahnen mit den Drehstromwicklungen verbunden sind, und mit einer Plus- und einer Minusklemme für den Generator-Laststrom. Der Entstörkondensator befindet sich bei derartigen serienmäßig gelieferten Drehstromgeneratoren für Kraftfahrzeuge außen am Gehäuse des Generators ; diese Anbringung erlaubt zwar eine Auswechslung des Entstörkondensators, erfordert jedoch zusätzliche Montagekosten. Dargestellt ist ein solcher Drehstromgenerator von seiner Außenseite und teilweise auch im Schnitt in « Bosch/Technische Unterrichtung/Drehstromgeneratoren für Kraftfahrzeuge, VDT-UBE 315/30 (12.70) », Seite 14, Bild 25 ; der prinzipielle Aufbau eines solchen Drehstromgenerators (jedoch ohne Entstörkondensator) ist auch aus der DE-OS-28 47 502 ersichtlich.

Entstörkondensatoren finden auch bei Elektromotoren Anwendung : Aus der GB-2 044 552 A ist so z. B. ein Elektromotor mit einer aus Kunststoff bestehenden Bürstenhalterplatte bekannt, wobei eine Aufnahme für einen Kondensator auf dieser Bürstenhalterplatte vorgesehen ist. Auch aus der US-PS-3 924 147 ist ein Elektromotor mit einem Entstörkondensator zu ersehen ; hierbei ist innerhalb des Elektromotors eine elektrisch isolierende Anschlußplatte angeordnet, an deren einer Seite auf nicht erläuterte Weise ein Entstörkondensator angebracht ist.

Der Erfindung liegt demgegenüber nun die Aufgabe zugrunde, eine Lösung zu schaffen, bei welcher sowohl die Kosten der Montage des Entstörkondensators als auch die Kosten der Bauteile des Entstörkondensators selbst geringer sind und der Entstörkondensator außerdem gegen mechanische Beschädigung geschützt ist.

Zur Lösung dieser Aufgabe ist erfindungsgemäß vorgesehen, daß der Entstörkondensator an jeder seiner beiden Stirnseiten ein streifenförmiges Anschlußstück trägt, welches neben dem Entstörkondensator eine Hülse besitzt, durch die hindurch ein Verbindungsmittel zur Befestigung einer Kühlplatte an der Anschlußplatte führbar ist, wobei die Hülse an ihrem einen stirnseitigen Abschnitt einen Flansch aufweist und ihre Längsachse senkrecht zur Längsachse des Entstörkondensators verläuft, und daß der Entstörkondensator mit den beiden Anschlußstücken eine vorgefertigte Baueinheit bildet, die bei der Herstellung der Anschlußplatte in deren Spritz- oder Preßform einlegbar und von dem Isolierstoff der Anschlußplatte zumindest im Bereich der Flansche umfaßt und festgelegt ist.

Eine besonders gegen die beim Betrieb in Kraftfahrzeugen auftretenden Schüttelbeanspruchungen widerstandsfähige Anordnung ergibt sich, wenn in weiterer Ausgestaltung der Erfindung außer dem Entstörkondensator selbst auch dessen Anschlußleitungen in den Werkstoff der Anschlußplatte mit eingeformt sind.

Weitere Ausgestaltungen der Erfindung ergeben sich aus den Unteransprüchen in Verbindung mit dem nachstehend beschriebenen Ausführungsbeispiel, einem Drehstromgenerator, der in der Zeichnung dargestellt ist.

Es zeigen :

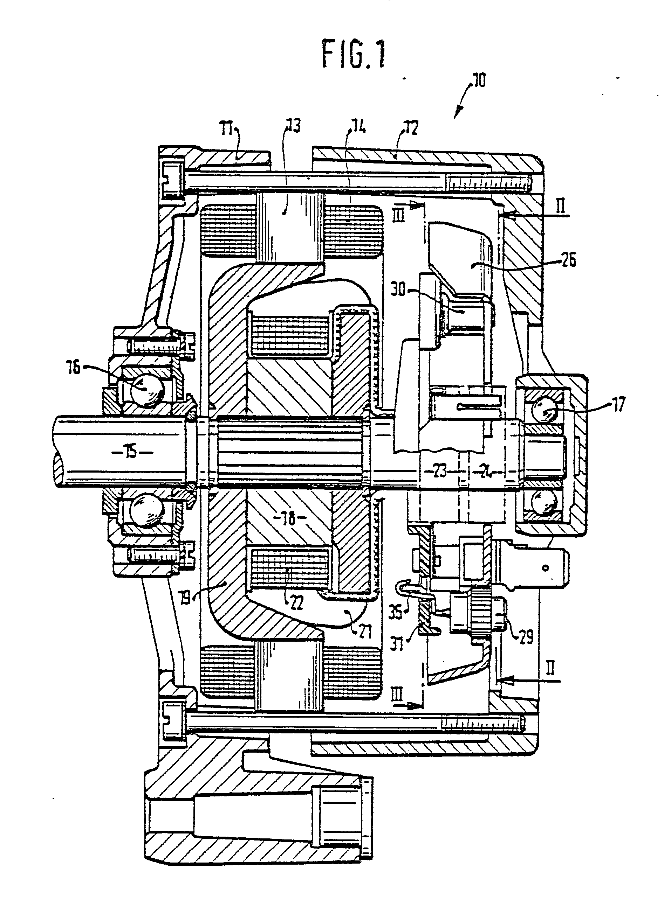

Figur 1 den Drehstromgenerator in einem axialen Längsschnitt mit seiner Anschlußplatte sowie seinen Kühlplatten und den auf den Kühlplatten befestigten Laststromdioden, teilweise im Längsschnitt nach der Linie I/I in Figur 2

Figur 2 die Anschlußplatte in ihrer axialen Draufsicht, in Richtung des Pfeiles II/II in Figur 1, auf die beiden Kühlplatten gesehen,

Figur 3 die Anschlußplatte samt beiden Kühlplatten in Richtung des Pfeiles III in Figur 1 gesehen und

Figur 4 die Anschlußplatte, wie in Figur 2 bzw. 3, jedoch ohne die Kühlplatten.

Die Fig. 5 bis 7 zeigen ausschnittsweise die zur Befestigung und zum Anschluß des Entstörkondensators dienenden Verbindungsmittel.

Der dargestellte Drehstromgenerator 10 ist zum Antrieb durch den Motor eines Kraftfahrzeuges bestimmt. Als Gehäuse des Generators 10 dient ein antriebsseitiger Lagerschild 11 und ein antriebsferner Lagerschild 12. Zwischen diesen beiden Lagerschilden ist ein Statorblechpaket 13 eingespannt, das drei im einzelnen nicht wiedergegebene Drehstromwicklungen 14 trägt. Die Generatorwelle 15 ist mit einem ersten Lager 16 im Lagerschild 11 und mit einem zweiten Lager 17 im Lagerschild 12 drehbar aufgenommen. Die Generatorwelle 15 trägt einen Klauenpolanker, der aus einem Kern 18, zwei ineinandergreifenden Polrädern 19 und 21 sowie einer den Kern 18 umgreifenden Erregerwicklung 22 besteht. Der Erregerstrom wird der Erregerwicklung über zwei mit unterbrochenen Linien angedeuteten Schleifringe 23 und 24 zugeführt und mit Hilfe eines im einzelnen nicht näher dargestellten Spannungsreglers so eingestellt, daß sich am Ausgang des Generators eine von der Antriebsdrehzahl und der Belastung des Generators weitgehend unabhängige Gleichspannung ergibt.

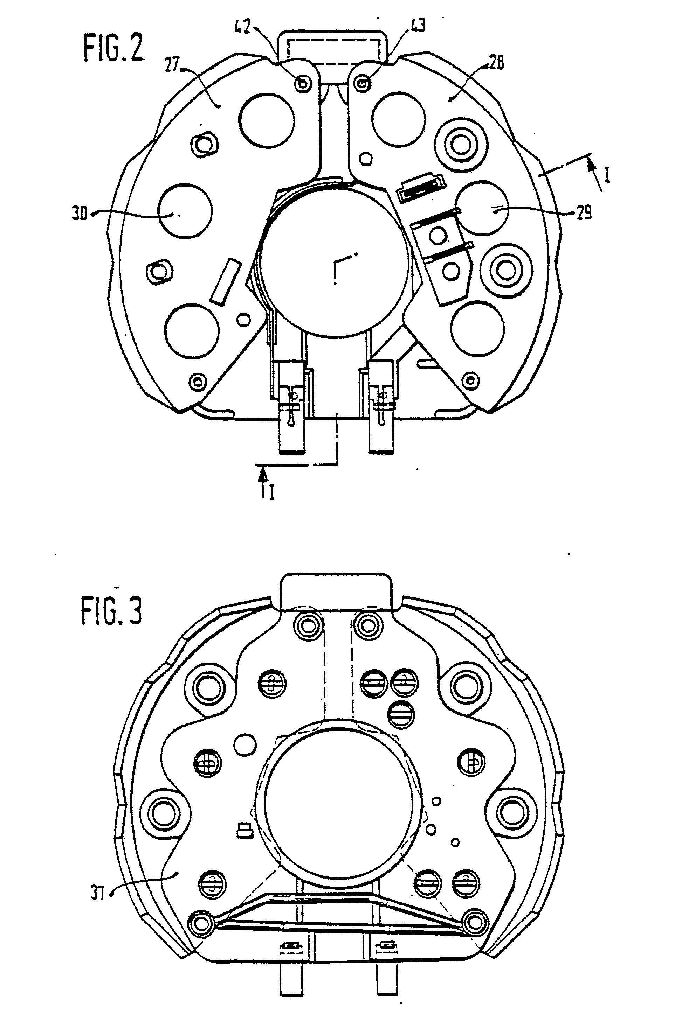

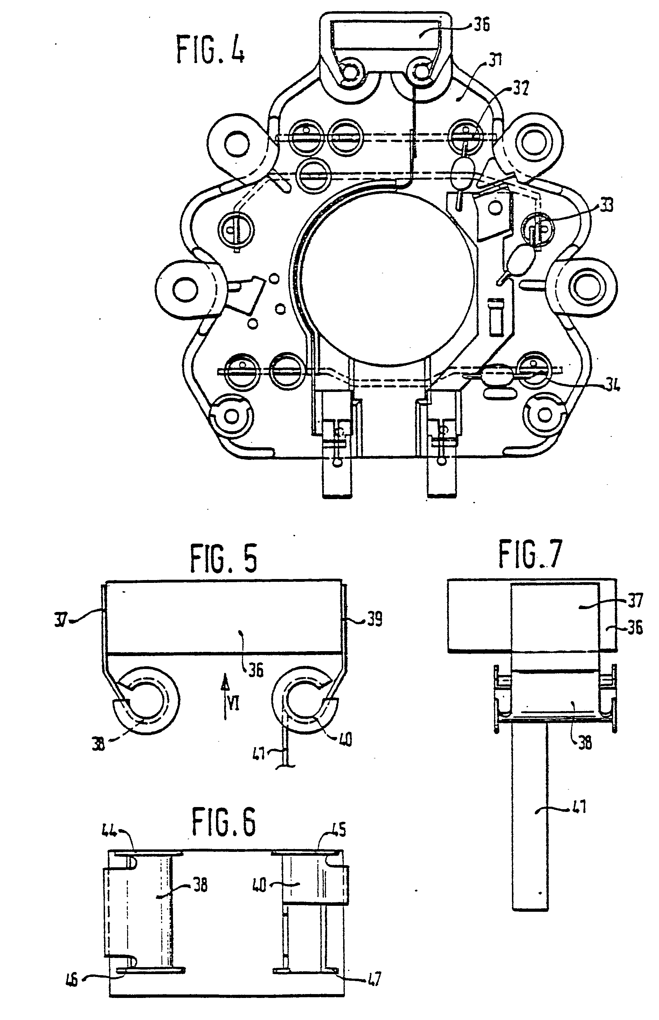

Zur Erzeugung dieser Ausgangsgleichspannung ist eine Gleichrichteranordnung 26 vorgesehen, die im einzelnen zwei Kühlplatten 27 und 28 (siehe insbesondere Fig. 2) mit je drei Plusdioden 29 bzw. Minusdioden 30 und aus einer aus erhärtendem Kunststoff gepreßten, in Fig. 4 im einzelnen näher dargestellten Anschlußplatte 31 besteht. In dieser sind drei Verbindungsleitungen 32, 33 und 34 eingebettet, an welche die drei Drehstromwicklungen einzeln angeschlossen werden können ; die Leitungen 32, 33 und 34 verbinden jeweils zwei Diodenanschlußdrähte 35 eines aus einer Plusdiode 29 und einer Minusdiode 30 bestehenden Diodenpaares untereinander und mit je einer Drehstromwicklung.

In die Anschlußplatte 31 ist außerdem ein Entstörkondensator 36 integriert. Der Entstörkondensator ist an einer seiner beiden Stirnseiten gemäß Fig. 5 und 6 mit einem Blechstreifen 37 großflächig verlötet, der an seinem freien Endabschnitt zu einer Hülse 38 eingerollt ist. Mit der anderen Stirnseite des Entstörkondensators 36 ist ein Blechstreifen 39 verlötet, der ebenfalls zu einer Hülse 40 eingerollt ist und sich im Gegensatz zur Hülse 38 und deren Anschlußblech in einem tangential abstehenden schmalen Anschluß-Blechstreifen 41 fortsetzt. Der Entstörkondensator 36 bildet zusammen mit seinen Anschlußstücken 37 bis 41 eine vorgefertigte Baueinheit, die bei der Herstellung der Anschlußplatte 31 in deren Preßform, die in der Zeichnung nicht dargestellt ist, eingelegt und dort mit Hilfe der Hülsen 40 positioniert werden kann. Dabei dienen die Hülsen 38 und 40 zur Lagebestimmung des Kondensators 36 und außerdem zur metallischen Kontaktierung des Kondensators mit der beim Betrieb des Generators Pluspotential führenden Kühlplatte 28 und der Minusplatte 27, wenn diese Platten mit durch die Hülsen greifenden Hohlnieten 42 und 43 mit der Anschlußplatte 31 verbunden werden. Jede der beiden Hülsen 38 und 40 trägt an ihrer Stirnseite eine angeformte, flanschartige Verbreiterung 44, 45 zur Kontaktgabe mit den Hohlnieten 42 und 43 und an der anderen Stirnseite jeweils einen Flansch 46, 47, der von dem Isolier-Preßstoff der Anschlußplatte 31 umschlossen ist und die Verankerung mit der Anschlußplatte bewirkt.

**Patentansprüche**

1. Drehstromgenerator (10), insbesondere für Kraftfahrzeuge, mit einem Entstörkondensator (36) und mit mindestens drei Drehstromwicklungen und zwei voneinander isoliert auf der Anschlußplatte (31) befestigten, sich vorzugsweise quer zur Generatorachse erstreckenden Kühlplatten (27, 28), von denen jede jeweils drei für den Generator-Laststrom bestimmte Dioden (29, 30) trägt, die über in oder auf der Anschlußplatte (31) sitzende Leiterbahnen (32, 33, 34) mit den Drehstromwicklungen verbunden sind, und mit einer Plus- und einer Minusklemme für den Generator-Laststrom, dadurch gekennzeichnet, daß der Entstörkondensator (36) an jeder seiner beiden Stirnseiten ein streifenförmiges Anschlußstück (37, 39) trägt, welches neben dem Entstörkondensator (36) eine Hülse (38, 40) besitzt, durch die hindurch ein Verbindungsmittel (42, 43) zur Befestigung einer Kühlplatte (27, 28) an der Anschlußplatte (31) führbar ist, wobei die Hülse (38, 40) an ihrem einen stirnseitigen Abschnitt einen Flansch (46, 47) aufweist und ihre Längsachse senkrecht zur Längsachse des Entstörkondensators (36) verläuft, und daß der Entstörkondensator (36) mit den beiden Anschlußstücken (37, 39) eine vorgefertigte Baueinheit bildet, die bei der Herstellung der Anschlußplatte (31) in deren Spritz- oder Preßform einlegbar und von dem Isolierstoff der Anschlußplatte (31) zumindest im Bereich der Flansche (46, 47) umfaßt und festgelegt ist.

2. Generator nach Anspruch 1, dadurch gekennzeichnet, daß die Anschlußleitungen (37, 39, 41) für den Entstörkondensator (36) in den Werkstoff der Anschlußplatte (31) mit eingeformt sind.

3. Generator nach Anspruch 1 oder 2, dadurch gekennzeichnet, daß die Hülsen (38, 40) der Anschlußstücke (37, 39) an ihren zweiten Stirnseiten Flansche (44, 45) als Auflage der Kühlplatten (27, 28) tragen.

4. Generator nach einem der Ansprüche 1 bis 3, dadurch gekennzeichnet, daß die mit der Hülse (38, 40) versehenen streifenförmigen Anschlußstücke (37, 39) großflächig auf jeweils eine der Kondensator-Stirnseiten aufgelötet sind.

5. Generator nach einem der Ansprüche 1 bis 4, dadurch gekennzeichnet, daß jede der Hülsen (38, 40) mit ihrem Blechstreifen (37, 39) einstückig verbunden, insbesondere aus einem gemeinsamen Blechzuschnitt gerollt ist.

**Claims**

1. Three-phase generator (10), particularly for motor vehicles, comprising an interference-suppression capacitor (36) and at least three three-phase windings and two cooling plates (27, 28) which are mounted insulated from each other on the connecting board (31) and preferably extend transversely with respect to the generator axis and each of which carries in each case three diodes (29, 30) which are intended for the generator load current and which are connected to the three-phase windings via conductor tracks (32, 33, 34) located in or on the connecting board (31), and comprising a positive and a negative terminal for the generator load current, characterised in that the interference-suppression capacitor (36) carries at each of its two end faces a strip-shaped connecting piece (37, 39) which has adjacently to the interference-suppression capacitor (36) a sleeve (38, 40) through which a connecting means (42, 43) can be passed for attaching a cooling plate (27, 28) to the connecting board (31), in which arrangement the sleeve (38, 40) has a flange (46, 47) at one end-face section and its longitudinal axis extends perpendicularly to the longitudinal axis of the interference-suppression capacitor (36), and that the interference-suppression capacitor (36) and the two connecting pieces (37, 39) form a prefabricated constructional unit which, during the production of the connecting board (31) can be inserted into the injection or compression mould of the latter and is enclosed and located by the insulating material of the connecting board (31) at least in the area of the flanges (46, 47).

2. Generator according to Claim 1, characterised in that the connecting lines (37, 39, 41) for the interference-suppression capacitor (36) are also moulded into the material of the connecting board (31).

3. Generator according to Claim 1 or 2, characterised in that the sleeves (38, 40) of the connecting pieces (37, 39) carry flanges (44, 45) at their second end faces as support for the cooling plates (27, 28).

4. Generator according to one of Claims 1 to 3, characterised in that the strip-shaped connecting pieces (37, 39) provided with the sleeve (38, 40) are soldered over a large area to one of the capacitor end faces in each case.

5. Generator according to one of Claims 1 to 4, characterised in that each of the sleeves (38, 40) is integrally connected to its sheet-metal strip (37, 39), and is in particular rolled from a common sheet-metal blank.

**Revendications**

1. Alternateur (10), notamment pour véhicules à moteur, comportant un condensateur antiparasites (36) et au moins trois enroulements de courant alternatif et deux plaques de refroidissement (27, 28) isolées l'une de l'autre et fixées sur la plaque de raccordement (31), ces plaques s'étendant de préférence transversalement à l'axe de l'alternateur, plaques dont chacune porte respectivement trois diodes (29, 30) pour le courant de charge de l'alternateur, diodes qui sont reliées aux enroulements de courant par des chemins conducteurs (32, 33, 34) réalisées dans ou sur la plaque de raccordement (31), et une borne positive et une borne négative pour le courant de charge de l'alternateur, caractérisé en ce que le condensateur antiparasites (36) comporte à chacune de ses deux faces frontales une pièce de raccordement (37, 39) en forme de bande qui possède à côté du condensateur antiparasites (36) une douille (38, 40) à travers laquelle on peut faire passer un moyen de liaison (42, 43) pour fixer une plaque de refroidissement (27, 28) sur la plaque de raccordement (31), la douille (38, 40) ayant au niveau de son segment situé du côté de la face frontale, une bride (46, 47) et son axe longitudinal est perpendiculaire à l'axe longitudinal du condensateur (36), et en ce que le condensateur antiparasites (36) forme avec les deux pièces de raccordement (37, 39) un ensemble préfabriqué que l'on place dans le moule d'injection ou de moulage lors de la fabrication de la plaque de raccordement (31) et qui est entouré et est bloqué par le matériau isolant de la plaque de raccordement (31), au moins au niveau des brides (46, 47).

2. Alternateur selon la revendication 1, caractérisé en ce que les conducteurs de raccordement (37, 39, 41) du condensateur antiparasites (36) sont insérés dans le matériau de la plaque de raccordement (31).

3. Alternateur selon les revendications 1 ou 2, caractérisé en ce que les douilles (38, 40) des pièces de raccordement (37, 39) portent au niveau de leur seconde face frontale, des brides (44, 45) comme appuis pour les plaques de refroidissement (27, 28).

4. Alternateur selon l'une des revendications 1 à 3, caractérisé en ce que les pièces de raccordement (37, 39) en forme de bandes munies de la douille (38, 40) sont soudées par des soudures de grande surface chaque fois sur l'une des faces frontales du condensateur.

5. Alternateur selon l'une des revendications 1 à 4, caractérisé en ce que chaque douille (38, 40) est reliée en une seule pièce à sa bande de tôle (37, 39) et est notamment réalisée en roulant une seule pièce de tôle découpée.

# FIG.1

FIG.2

FIG.3

FIG. 4

FIG. 5

FIG. 7

FIG. 6